# EUROPEAN PATENT APPLICATION

(11) **EP 4 841 623 A1**
(43) Date of publication of application: **18.11.2026**
(21) Application number: 26175650.6
(22) Date of filing: 30.04.2026
(51) Int. Cl.: G10L 15/22, G06F 3/16

(54) **INFORMATION PROCESSING DEVICE, INFORMATION PROCESSING METHOD, AND NON-TRANSITORY STORAGE MEDIUM**

(30) Priority: 12.05.2025 JP 2025079597
(71) Applicant: Toyota Jidosha Kabushiki Kaisha, Toyota-shi, Aichi-ken 471-8571 (JP)
(72) Inventor: YAMABE, Takayuki, Toyota-shi, Aichi-ken 471-8571 (JP); YAMADA KAMISAKA, Aya, Toyota-shi, Aichi-ken 471-8571 (JP); TOJIKI, Hajime, Toyota-shi, Aichi-ken 471-8571 (JP); NAKANISHI, Ryota, Toyota-shi, Aichi-ken 471-8571 (JP); HOSHIBA, Kota, Toyota-shi, Aichi-ken 471-8571 (JP)
(74) Representative: TBK

(57) **Abstract**

An information processing device (100; 200) is an information processing device (100; 200) configured to hold a dialogue with a user (20) in a natural language, and includes a processor. The processor is configured to: when there is no response from the user (20) to an inquiry made by the information processing device (100; 200), estimate a situation that the user (20) is in based on information acquired by at least one of one or more sensors (30) installed around the user (20); and execute a predetermined process for adjusting progress of the dialogue according to the estimated situation.

## Description

### BACKGROUND OF THE INVENTION

### 1. Field of the Invention

The present disclosure relates to an information processing device, an information processing method, and a non-transitory storage medium that provide information via a dialogue with a user.

### 2. Description of Related Art

There are techniques of holding a dialogue with a user using natural language processing and providing information to the user based on the dialogue. In this regard, for example, Japanese Unexamined Patent Application Publication No. 2020-119436 (JP 2020-119436 A) discloses a dialogue device and the like, the dialogue device including an inquiry means that makes an inquiry of a user by voice, and an intention determination means that determines the intention of the user based on a response from the user by voice to the inquiry made by the inquiry means. Furthermore, Japanese Unexamined Patent Application Publication No. 2023-59977 (JP 2023-59977 A) discloses a method including receiving an audio input including a natural language user input, and identifying an intent object within an intent object set. The method includes identifying a software application associated with the intent object, causing the software application to execute a task associated with the intent object, etc.

### SUMMARY OF THE INVENTION

The present disclosure provides an information processing device, an information processing method, and a non-transitory storage medium that use machine learning to take appropriate action in a dialogue with a user according to the situation that the user is in.

A first aspect of the present disclosure provides an information processing device configured to hold a dialogue with a user in a natural language, the information processing device including a processor. The processor is configured to: when there is no response from the user to an inquiry made by the information processing device, estimate a situation that the user is in based on information acquired by at least one of one or more sensors installed around the user; and execute a predetermined process for adjusting progress of the dialogue according to the estimated situation.

In the information processing device according to the first aspect of the present disclosure, the processor may be configured to: further estimate a feeling of the user based on the information acquired by the at least one of the one or more sensors; and execute the predetermined process further based on the feeling of the user.

In the information processing device according to the first aspect of the present disclosure, the predetermined process may be a process related to making a second inquiry of the user. The processor may be configured to, when determination is made based on the information acquired by the at least one of the one or more sensors that the user is in a situation in which responding is difficult when there is no response from the user, make no second inquiry, or stand by to make the second inquiry for a longer waiting time compared to when determination is made that the user is not in the situation in which the responding is difficult.

In the information processing device according to the first aspect of the present disclosure, the predetermined process may be a process related to making a second inquiry of the user. The processor may be configured to make no second inquiry when determination is made based on the information acquired by the at least one of the one or more sensors that the user has no intention to respond.

In the information processing device according to the first aspect of the present disclosure, the predetermined process may be a process related to making a second inquiry of the user. The processor may be configured to further acquire a moving speed of the user, and when the moving speed is equal to or more than a predetermined threshold when there is no response from the user, stand by to make the second inquiry for a longer waiting time compared to when the moving speed is less than the predetermined threshold.

In the information processing device according to the first aspect of the present disclosure, the predetermined process may be a process related to making a second inquiry of the user. The processor may be configured to further acquire image data obtained by capturing a scene around the user, and when determination is made based on the image data captured around the user that the user is moving on a road with poor visibility when there is no response from the user, stand by to make the second inquiry for a longer waiting time compared to when the determination is not made that the user is moving on the road with poor visibility.

In the information processing device according to the first aspect of the present disclosure, the second inquiry may include at least one of a second inquiry made of the user by voice and a second inquiry made of the user by display of an image on a screen.

In the information processing device according to the first aspect of the present disclosure, the second inquiry may be a second inquiry made of the user. The second inquiry may include at least one of an inquiry that requests a response from the user by voice and an inquiry that requests a response from the user by depression of a predetermined button.

In the information processing device according to the first aspect of the present disclosure, the information acquired from the sensors may include at least one of data that indicate a vehicle speed of a vehicle that the user is on, image data obtained by a predetermined camera capturing the user or a scene around the user, and sound data that indicate a sound generated by the user or a sound generated around the user.

In the information processing device according to the first aspect of the present disclosure, the processor may be configured to execute two or more predetermined processes based on the situation that the user is in or a feeling of the user.

A second aspect of the present disclosure provides an information processing method executed by an information processing device configured to hold a dialogue with a user in a natural language, the information processing method including: when there is no response from the user to an inquiry made by the information processing device, estimating a situation that the user is in based on information acquired by at least one of one or more sensors installed around the user; and executing a predetermined process for adjusting progress of the dialogue according to the estimated situation.

The information processing method according to the second aspect of the present disclosure may further include: further estimating a feeling of the user based on the information acquired by the at least one of the one or more sensors; and executing the predetermined process further based on the feeling of the user.

In the information processing method according to the second aspect of the present disclosure, the predetermined process may be a process related to making a second inquiry of the user. The information processing method may further include, when determination is made based on the information acquired by the at least one of the one or more sensors that the user is in a situation in which responding is difficult when there is no response from the user, making no second inquiry, or standing by to make the second inquiry for a longer waiting time compared to when determination is made that the user is not in the situation in which the responding is difficult.

In the information processing method according to the second aspect of the present disclosure, the predetermined process may be a process related to making a second inquiry of the user. The information processing method may further include making no second inquiry when determination is made based on the information acquired by the at least one of the one or more sensors that the user has no intention to respond.

In the information processing method according to the second aspect of the present disclosure, the predetermined process may be a process related to making a second inquiry of the user. The information processing method may further include further acquiring a moving speed of the user, and when the moving speed is equal to or more than a predetermined threshold when there is no response from the user, standing by to make the second inquiry for a longer waiting time compared to when the moving speed is less than the predetermined threshold.

In the information processing method according to the second aspect of the present disclosure, the predetermined process may be a process related to making a second inquiry of the user. The information processing method may further include further acquiring image data obtained by capturing a scene around the user, and when determination is made based on the image data captured around the user that the user is moving on a road with poor visibility when there is no response from the user, standing by to make the second inquiry for a longer waiting time compared to when the determination is not made that the user is moving on the road with poor visibility.

In the information processing method according to the second aspect of the present disclosure, the second inquiry may include at least one of a second inquiry made of the user by voice and a second inquiry made of the user by display of an image on a screen.

In the information processing method according to the second aspect of the present disclosure, the second inquiry may include at least one of an inquiry that requests a response from the user by voice and an inquiry that requests a response from the user by depression of a predetermined button.

In the information processing method according to the second aspect of the present disclosure, the information acquired by the at least one of the one or more sensors may include at least one of data that indicate a vehicle speed of a vehicle that the user is on, image data obtained by a predetermined camera capturing the user or a scene around the user, and sound data that indicate a sound generated by the user or a sound generated around the user.

A third aspect of the present disclosure may be a non-transitory storage medium storing instructions that are executable by one or more processors and that cause the one or more processors to execute the information processing method according to the second aspect.

The information processing device according to the present disclosure can take appropriate action according to the situation that the user is in in a dialogue with the user.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a diagram illustrating a network configuration including a server device according to an embodiment;
FIG. 2 is a diagram illustrating components of the server device according to the embodiment;
FIG. 3 is a flowchart of a process, executed by the server device according to the embodiment, to execute a process according to the situation of a user;
FIG. 4 is a flowchart of a process to be executed by the server device according to the embodiment, according to whether a user is in a situation in which it is difficult to respond; and
FIG. 5 is a flowchart of a process to be executed by the server device according to a second modification, according to the moving speed of the user.

### DETAILED DESCRIPTION OF EMBODIMENTS

### Overview

There is a need for a service that provides appropriate information to a user based on a dialogue with the user in a natural language.

In this regard, there is a technique of estimating the intention of a user during a dialogue with the user.

For example, a dialogue device can make an inquiry of a user by voice and determine the intention of the user based on a response from the user by voice to the inquiry.

Specifically, the dialogue device makes an inquiry of the user by voice and acquires a response from the user by voice. Then, the dialogue device performs a speech recognition process on the response from the user by voice, and attempts to determine a positive response, a negative response, or a predetermined keyword that indicates the intention of the user. When the dialogue device cannot determine a positive response, a negative response, or a predetermined keyword that indicates the intention of the user, the dialogue device makes a second inquiry that prompts the user to respond by a method other than by voice. Then, the dialogue device estimates the intention of the user based on an image obtained by capturing reaction to the second inquiry.

However, there is room for improvement in the dialogue device. For example, when the dialogue device is configured to repeatedly make a second inquiry of the user when the dialogue device cannot estimate the intention of the user, the dialogue device may repeatedly make an inquiry of the user even when the user is intentionally ignoring the dialogue with the dialogue device. In this case, the operation of the dialogue device attempting to estimate the intention of the user itself constitutes operation ignoring the intention of the user not wanting to continue the dialogue. In order to reduce such a situation, it is desirable that the dialogue device should be able to correctly estimate the intention of the user and take appropriate action when there is no response from the user.

A first aspect of the present disclosure provides an information processing device that holds a dialogue with a user in a natural language, the information processing device including a control unit configured to: when there is no response from the user to an inquiry made by the device, estimate a situation that the user is in based on information acquired by at least one of one or more sensors installed around the user; and execute a predetermined process for adjusting progress of the dialogue according to the estimated situation.

The response is a reply made by the user to a dialogue device, and includes voice, gestures, and operations such as depression of a predetermined button.

The sensors are sensors installed around the user, and include a camera, a microphone, a motion sensor, and a distance measurement sensor.

The predetermined process for adjusting the progress of a dialogue includes continuing or terminating the dialogue, adjusting the timing to make an inquiry when continuing the dialogue, and the like.

When there is no response from the user, the control unit estimates the situation that the user is in based on the information acquired by the sensor, and executes the predetermined process for adjusting the progress of the dialogue according to the estimated situation.

In this way, the information processing device according to the present disclosure can appropriately adjust the progress of a dialogue according to the situation that the user is in.

With such a configuration, the information processing device according to the present disclosure can take appropriate action according to the situation that the user is in in a dialogue with the user.

The control unit may further estimate a feeling of the user based on the information acquired by the at least one of the one or more sensors, and execute the predetermined process further based on the feeling of the user.

This allows the information processing device according to the present disclosure to appropriately adjust the progress of the dialogue according to the feeling of the user.

The predetermined process may be a process related to making a second inquiry of the user; and the control unit may, when it is determined based on the information acquired by the at least one of the one or more sensors that the user is in a situation in which it is difficult to respond when there is no response from the user, make no second inquiry, or stand by to make the second inquiry for a long waiting time compared to when it is determined that the user is not in the situation in which it is difficult to respond.

This allows the information processing device according to the present disclosure to refrain from making an inquiry of the user when the user is in a situation in which it is difficult to continue the dialogue.

The predetermined process may be a process related to making a second inquiry of the user; and the control unit may make no second inquiry when it is determined based on the information acquired by the at least one of the one or more sensors that the user has no intention to respond.

This allows the information processing device according to the present disclosure to refrain from making an inquiry of the user when the user has an intention not to continue the dialogue.

The predetermined process may be a process related to making a second inquiry of the user; and the control unit may further acquire a moving speed of the user, and when the moving speed is equal to or more than a predetermined threshold when there is no response from the user, stand by to make the second inquiry for a long waiting time compared to when the moving speed is less than the predetermined threshold.

This allows the information processing device according to the present disclosure to refrain from making an inquiry of the user when it is estimated that the user is moving at a high speed and is therefore in a situation in which it is difficult to continue the dialogue.

The predetermined process may be a process related to making a second inquiry of the user; and the control unit may further acquire image data obtained by capturing a scene around the user, and when it is determined based on the image data captured around the user that the user is moving on a road with poor visibility when there is no response from the user, stand by to make the second inquiry for a long waiting time compared to when it is not determined that the user is moving on the road with poor visibility.

This allows the information processing device according to the present disclosure to refrain from making an inquiry of the user when it is estimated that the user is in a situation in which attention is required for movement and it is difficult to continue the dialogue.

The second inquiry may include at least one of a second inquiry made of the user by voice and a second inquiry made of the user by display of an image on a screen.

The second inquiry may be a second inquiry made of the user; and the second inquiry may include at least one of an inquiry that requests a response from the user by voice and an inquiry that requests a response from the user by depression of a predetermined button.

The information acquired from the sensors may include at least one of data that indicate a vehicle speed of a vehicle that the user is on, image data obtained by a predetermined camera capturing the user or a scene around the user, and sound data that indicate a sound generated by the user or a sound generated around the user.

This allows the information processing device according to the present disclosure to adequately estimate the situation of the user, etc., based on various data sources.

The control unit may execute two or more predetermined processes based on the situation that the user is in or a feeling of the user.

This allows the information processing device according to the present disclosure to take action that better meets the needs of the user.

A specific embodiment of the present disclosure will be described below with reference to the drawings. The hardware configurations, module configurations, and functional configurations described in the embodiment are not intended to limit the technical scope of the present disclosure to those configurations unless otherwise specified.

### Embodiment

### Network Configuration Including Server Device

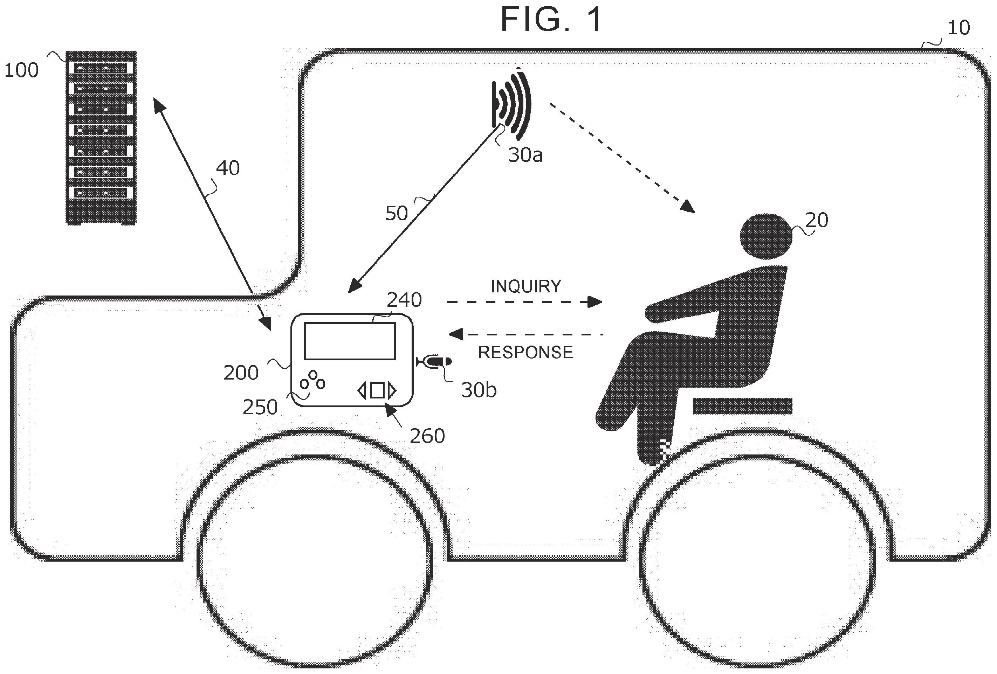

An overview of a network configuration including a server device according to an embodiment will be described with reference to FIG. 1. FIG. 1 is a diagram illustrating a network configuration including a server device 100 according to the embodiment. An information processing device according to one aspect of the present disclosure is implemented as the server device 100.

The server device 100 is an information processing device that provides appropriate information to a user 20 based on a dialogue with the user 20 carried out using natural language processing that uses generative artificial intelligence (AI) etc. The server device 100 communicates with an in-vehicle terminal 200 via a communication network 40 via a wide area network.

Typically, the user 20 is on the vehicle 10 and speaks to the in-vehicle terminal 200 that communicates with the server device 100. The server device 100 analyzes a speech uttered by the user 20 etc. acquired via a microphone 30b and generates a response corresponding to the meaning and content of the uttered speech. The response from the in-vehicle terminal 200 may be output as a voice via a speaker 250, or may be output as a text or an image to a display 240, for example.

As described above, the server device 100 reads the intention of the user 20 from the content of the speech by the user 20 and generates an appropriate response. When the server device 100 is unable to properly read the intention of the user from the content of the speech by the user 20, the server device 100 makes a second inquiry of the user 20. Furthermore, when there is no response from the user 20, the server device 100 makes a second inquiry of the user 20 after a certain period of time. The response from the user 20 is expected to be a voice such as a speech, or some kind of input to the in-vehicle terminal 200 via buttons 260 or the like. Alternatively, the server device 100 may voluntarily make an inquiry of the user 20 at a predetermined timing. The natural language processing used to generate a dialogue with the user 20 may instead be performed by the in-vehicle terminal 200. In that case, the in-vehicle terminal 200 is equipped with artificial intelligence such as generative AI.

The server device 100 estimates the situation that the user 20 is in in order to appropriately read the intention of the user 20 from the content of the speech by the user 20. Therefore, in order to obtain information for estimating the situation that the user 20 is in, the server device 100 acquires information detected by a sensor 30 installed in the vehicle 10, including a distance measurement sensor 30a or the microphone 30b, via a communication network 40. Specifically, the sensor 30 transmits the detected information to a communication unit (described later) of the in-vehicle terminal 200 connected via an in-vehicle network 50, and the communication unit of the in-vehicle terminal 200 transmits the information to the server device 100 via the communication network 40.

Then, the server device 100 estimates the situation that the user 20 is in based on the information detected by the sensor 30. Then, according to the estimated situation, the server device 100 determines whether to make an inquiry of the user 20, or when the server device 100 is to make an inquiry, adjusts the timing to make an inquiry.

### Configuration of Server Device

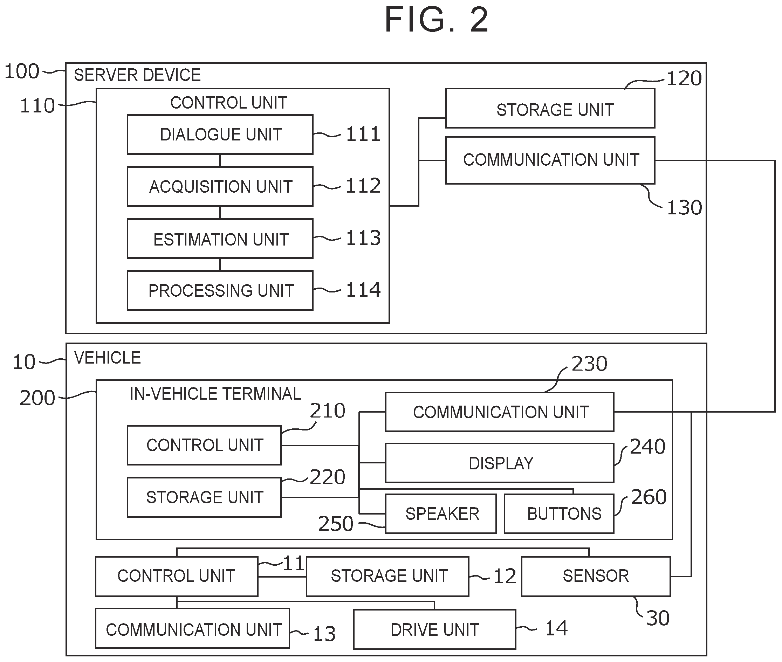

Next, the hardware configuration and the software configuration of the system including the server device 100 will be described. FIG. 2 is a diagram illustrating components of the server device 100 according to the embodiment.

The server device 100 can be constituted as a computer that includes a processor (such as a central processing unit (CPU) or a graphics processing unit (GPU)), a main storage device (such as a random access memory (RAM) or a read only memory (ROM)), and an auxiliary storage device (such as an erasable programmable read only memory (EPROM), a hard disk drive, or a removable medium). The auxiliary storage device stores an operating system (OS), various programs, various tables, etc. Various functions (software modules) for predetermined purposes, as described later, can be implemented by executing the programs stored in the auxiliary storage device. Some or all of the functions may be implemented as hardware modules by a hardware circuit such as an application specific integrated circuit (ASIC) or a field programmable gate array (FPGA).

The server device 100 is configured to include a control unit 110, a storage unit 120, and a communication unit 130.

The control unit 110 is a computing unit that implements various functions of the server device 100 by executing a predetermined program. The control unit 110 can be implemented by a hardware processor such as a CPU, for example. The control unit 110 may be configured to include a RAM, a ROM, a cache memory, and the like.

In the present embodiment, the control unit 110 of the server device 100 is configured to include four software modules, namely a dialogue unit 111, an acquisition unit 112, an estimation unit 113, and a processing unit 114. Each software module may be implemented by the control unit 110 (such as a CPU) executing a program stored in the storage unit 120. The information processing executed by the software module is equivalent to the information processing executed by the control unit 110 (such as a CPU).

The dialogue unit 111 is a processing unit that holds a dialogue with the user 20 in a natural language. The dialogue unit 111 is equipped with generative AI as software, analyzes a speech of the user 20 recognized by the microphone, an input text, or the like, and generates a response corresponding to the meaning expressed by the speech or the text. The dialogue unit 111 can acquire information by communicating with the communication network 40 via the communication unit 130. The dialogue unit 111 outputs a response by voice, text, or the like.

The acquisition unit 112 acquires data detected (acquired) by the sensor 30. The data acquired by the acquisition unit 112 may be any data as long as the data are used to determine the situation that the user 20 is in. The acquisition unit 112 may acquire the speech acquired by the sensor 30. The sensor 30 may be a camera, and the acquisition unit 112 may acquire an image captured by the camera. The sensor 30 may also be a device that detects position information of the user 20, and the acquisition unit 112 may acquire the position information of the user 20. The position information of the user 20 may be position information obtained by a Global Navigation Satellite System (GNSS) detecting a terminal associated with the user 20. Furthermore, the sensor 30 may be a sensor that can detect the movement of the user 20 such as a distance measurement sensor, and the acquisition unit 112 may acquire the results of detecting the movement of the user 20.

The estimation unit 113 estimates the situation that the user 20 is in based on the information detected by the sensor 30 and acquired by the acquisition unit 112. The estimation unit 113 may also estimate the feeling of the user 20 based on the information detected by the sensor 30 and acquired by the acquisition unit 112.

The processing unit 114 executes a predetermined process for adjusting the progress of the dialogue held by the dialogue unit 111 according to the situation etc. of the user 20 estimated by the estimation unit 113. Specifically, the processing unit 114 determines the timing to make a second inquiry of the user 20 in the dialogue, and instructs the dialogue unit 111 on the timing. Alternatively, the processing unit 114 determines to make no second inquiry of the user 20 in the dialogue, and instructs the dialogue unit 111 to make no second inquiry.

The storage unit 120 is a unit that stores information and is constituted by a storage medium such as a RAM, a magnetic disk, or a flash memory. The storage unit 120 stores the program to be executed by the control unit 110 and data to be used by the program, etc.

The communication unit 130 is a wireless communication interface for connecting the server device 100 to the communication network 40. The communication unit 130 is configured to communicate with an external device via a wireless local area network (LAN) or a third-generation (3G), fourth-generation (4G), or fifth-generation (5G) cellular communication network, for example.

The vehicle 10 is a vehicle that can communicate with the communication network 40. The vehicle 10 may be a passenger car, or may be a large vehicle such as a bus or a truck. The vehicle 10 includes a control unit 11, a storage unit 12, a communication unit 13, a drive unit 14, the sensor 30, and the in-vehicle terminal 200.

The control unit 11 is a computing unit that implements various functions of the vehicle 10 by executing a predetermined program. The control unit 11 can be implemented by a hardware processor such as a CPU, for example. The control unit 11 may be configured to include a RAM, a ROM, a cache memory, and the like. The control unit 11 executes various software programs for controlling travel etc. of the vehicle 10.

The storage unit 12 is a unit that stores information, and is constituted by a storage medium such as a RAM, a magnetic disk, or a flash memory. The storage unit 12 stores the program to be executed by the control unit 11, data to be used by the program, etc.

The communication unit 13 is a wireless communication interface for connecting the vehicle 10 to the communication network 40. The communication unit 13 is configured to communicate with an external device via a wireless LAN or a 3G, 4G, or 5G cellular communication network, for example.

The drive unit 14 is a mechanism that causes the vehicle 10 to travel. The drive unit 14 can be configured to include a motor and an inverter for driving wheels, brakes, and a steering mechanism, for example. The drive unit 14 may be driven by electric power supplied from a battery.

The sensor 30 includes sensors installed in the vehicle 10. The sensor 30 may include the distance measurement sensor 30a and the microphone 30b. The sensor 30 may include a temperature sensor, an infrared sensor, and a touch sensor, for example. There may be a plurality of sensors 30, and the sensors 30 do not have to be sensors of the same type.

The in-vehicle terminal 200 is a terminal that receives operations performed by the user 20 of the vehicle 10 on various devices provided in the vehicle 10 and provides information to the user 20. The in-vehicle terminal 200 is configured to include a control unit 210, a storage unit 220, a communication unit 230, the display 240, the speaker 250, and the buttons 260.

The control unit 210 receives an input from the user 20 and transmits the input to the server device 100 via the communication unit 230. The control unit 210 outputs, via the display 240 or the speaker 250, a text or a sound indicating a response to the input and transmitted from the server device 100.

The storage unit 220 is a unit that stores information, and is composed of a storage medium such as a RAM, a magnetic disk, or a flash memory. The storage unit 220 stores the program to be executed by the control unit 210, data to be used by the program, etc.

The communication unit 230 is a wireless communication interface for connecting the in-vehicle terminal 200 to the communication network 40. The communication unit 230 is configured to communicate with an external device via a wireless LAN or a 3G, 4G, or 5G cellular communication network, for example.

The display 240 is a display that displays an image etc. to provide information to the user. The display 240 may be a liquid crystal display or an organic electro-luminescence (EL) display. The display 240 may also be implemented as a touch panel display.

The speaker 250 is a device that outputs a sound to provide information to the user. The speaker 250 includes at least a voice coil, a magnet, and cone paper. The speaker 250 may be a full-range speaker. The speaker 250 may be provided in the vehicle 10 as a car speaker, instead of being provided in the in-vehicle terminal 200.

The buttons 260 are devices that receive an input from the user 20 to the in-vehicle terminal 200. The buttons 260 may be a plurality of projections that operates separately. The projections may receive different input contents. The buttons 260 may be, for example, buttons for receiving input contents to move a cursor upward, downward, rightward, and leftward, confirm, cancel, or the like, for example. The buttons 260 may be graphics that function as buttons for receiving predetermined inputs, displayed on the display 240 implemented as a touch panel.

The configuration illustrated in FIG. 2 is exemplary, and all or some of the illustrated functions may be executed using a specially designed circuit. The program may be stored or executed using any combination of main and auxiliary storage devices other than those illustrated.

### Process by Server Device

Next, the specific content of a process performed by the server device 100 according to one aspect of the present disclosure will be described.

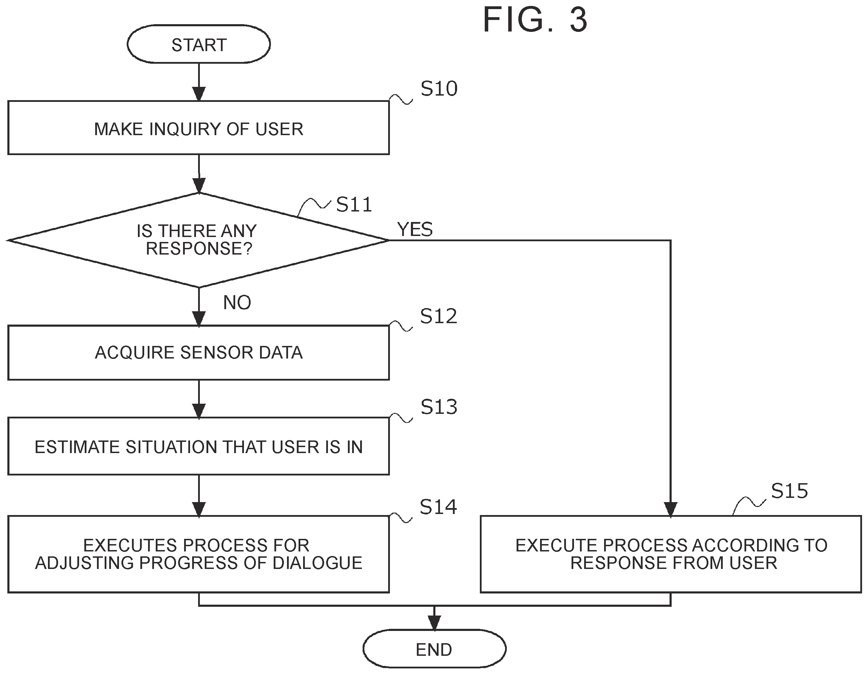

Here, a process, performed by the server device 100, to execute a process according to the situation that the user 20 is in when there is no response from the user 20 will be described. FIG. 3 is a flowchart of a process, executed by the server device 100 according to the embodiment, to execute a process according to the situation of the user. The process illustrated in FIG. 3 may be started when a timing determined in advance arrives, or may be started repeatedly at predetermined intervals. The process illustrated in FIG. 3 may also be started in response to some input from the user.

First, in step S10, the dialogue unit 111 makes an inquiry of the user 20 via the in-vehicle terminal 200. The dialogue unit 111 may make an inquiry that prompts the user 20 to respond via the in-vehicle terminal 200. For example, the dialogue unit 111 may ask a specific question of the user 20, such as "What would you like to eat for lunch?".

Next, in step S11, the dialogue unit 111 determines whether there is a response to the inquiry made of the user 20 via the in-vehicle terminal 200. The dialogue unit 111 may determine whether there is any input from the user 20 via the in-vehicle terminal 200 within a predetermined time after the inquiry is made of the user 20. Here, any input from the user 20 includes a speech by the user 20, depression of a predetermined button by the user 20, and the like. In this step, a positive determination is made when the dialogue unit 111 determines that there is a response to the inquiry made of the user 20.

When a positive determination is made in step S11, the process transitions to step S15.

When a negative determination is made in step S11, the process transitions to step S12.

When the process transitions to step S12, the acquisition unit 112 acquires data detected by the sensor 30. For example, the acquisition unit 112 may acquire image data captured by the camera serving as the sensor 30, or may acquire the results of detection of the movement of the user 20 by the distance measurement sensor 30a serving as the sensor 30. The information acquired from the sensor 30 may include at least either a sound produced by the user 20 and acquired by the microphone 30b or sound data indicating a sound generated around the user 20.

Next, in step S13, the estimation unit 113 estimates the situation that the user 20 is in based on the data detected by the sensor 30 and acquired by the acquisition unit 112. For example, the estimation unit 113 may analyze image data captured by a camera and estimate whether the user 20 is engaged in work other than the dialogue via the in-vehicle terminal 200, such as driving. Examples of the other work include driving the vehicle 10, operating a terminal such as a smartphone while the vehicle is parked, and eating or drinking while the vehicle is parked.

The estimation unit 113 may also determine based on the information acquired by the distance measurement sensor 30a whether the user 20 is looking back toward the rear seat. The estimation unit 113 may also determine based on the information acquired by the microphone 30b whether the user 20 is holding a conversation with another occupant.

Next, in step S14, the processing unit 114 determines to execute a predetermined process to adjust the progress of the dialogue according to the situation that the user 20 is in, estimated by the estimation unit 113, and instructs the dialogue unit 111 to execute the process. For example, when it is estimated that the user 20 is engaged in the other work, such as driving or operating a smartphone while the vehicle is parked, the processing unit 114 determines to make no inquiry and instructs the dialogue unit 111 to make no inquiry. By way of example, the processing unit 114 makes no second inquiry "What would you like to each for lunch?".

Also, for example, when it is estimated that the user 20 is looking back toward the rear seat, the processing unit 114 may determine that the user is engaged in some work in the rear seat and set the time before making a second inquiry to be longer than usual. Also, for example, when it is estimated that the user 20 is holding a conversation with another occupant, the processing unit 114 may stand by to make a second inquiry until it is detected that the conversation between the user 20 and the other occupant has ended. In this way, the predetermined process performed in step S14 may be a process related to a second inquiry, and the second inquiry may include at least one of a second inquiry by voice and a second inquiry by display of an image on a screen.

When the process transitions to step S15, the processing unit 114 determines to execute a process according to the response from the user 20, and instructs the dialogue unit 111 to execute the process. For example, the processing unit 114 instructs the dialogue unit 111 to generate a response including information retrieved based on the response from the user.

Then, the dialogue unit 111 carries out a dialogue in the manner indicated by the processing unit 114.

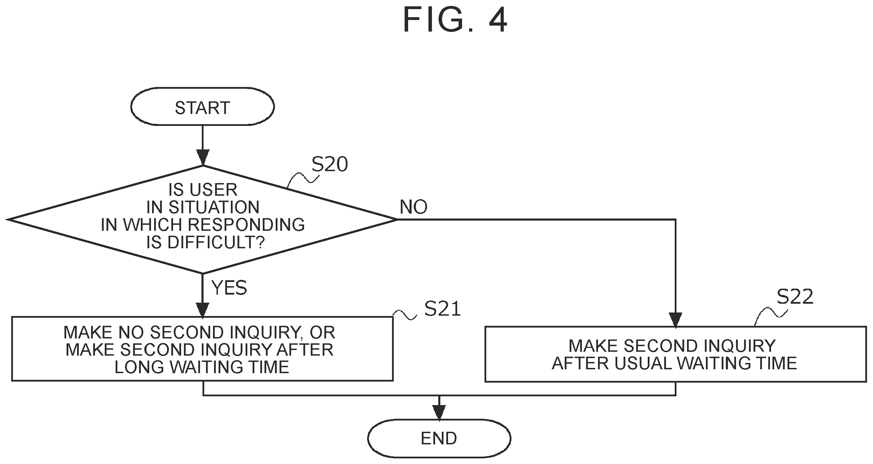

Next, the operation of the server device 100 will be described in detail using a specific situation that the user 20 is in as an example. FIG. 4 is a flowchart of a process to be executed by the server device 100 according to the embodiment, according to whether the user is in a situation in which it is difficult to respond. The process illustrated in FIG. 4 is a specific implementation of the processes in and after step S13 of the process illustrated in FIG. 3. Step S20 illustrated in FIG. 4 is executed after the process in step S12 illustrated in FIG. 3 in place of steps S13 and S14.

In step S20, the estimation unit 113 determines whether the user 20 is in a situation in which it is difficult to respond. For example, the estimation unit 113 determines based on the data acquired by the acquisition unit 112 in step S12 whether the user 20 is performing predetermined work other than the dialogue via the in-vehicle terminal 200. For example, the estimation unit 113 may analyze image data captured by a camera and estimate whether the user 20 is engaged in work other than the dialogue via the in-vehicle terminal 200, such as driving. Examples of the other work include driving the vehicle 10, operating a terminal such as a smartphone while the vehicle is parked, and eating or drinking while the vehicle is parked.

The estimation unit 113 may also determine based on the information acquired by the distance measurement sensor 30a whether the user 20 is looking back toward the rear seat. When the user 20 is looking back toward the sear seat, it is assumed that user 20 is organizing things on the rear seat, reaching for a thing, or taking care of a child seated in the rear seat. Therefore, when the estimation unit 113 determines that the user 20 is looking back toward the back seat, the estimation unit 113 may estimate that the user 20 is in a situation in which it is difficult to respond to the dialogue with the server device 100 via the in-vehicle terminal 200.

The estimation unit 113 may also determine based on the information acquired by the microphone 30b whether the user 20 is holding a conversation with another occupant. When the user 20 is holding a conversation with another occupant, it is assumed that the user 20 does not hear the dialogue with the server device 100 via the in-vehicle terminal 200. Therefore, when the estimation unit 113 determines that the user 20 is holding a conversation with another occupant, the estimation unit 113 may estimate that the user 20 is in a situation in which it is difficult to respond to the dialogue with the server device 100 via the in-vehicle terminal 200.

Specifically, the estimation unit 113 may determine based on an image captured by a camera installed around the user 20 whether the user 20 is performing predetermined work other than the dialogue. Then, when it is determined that the user 20 is performing predetermined work other than the dialogue, the estimation unit 113 may determine that the user 20 is in a situation in which it is difficult to respond. Here, examples of the predetermined work may include driving the vehicle 10, holding a conversation with an occupant, and viewing a map displayed on the display 240 of the in-vehicle terminal 200.

When the process transitions to step S21, the processing unit 114 determines to make no second inquiry of the user 20, or to make a second inquiry of the user 20 after standing by for a waiting time longer than the usual waiting time. Then, the processing unit 114 instructs the dialogue unit 111 to carry out the above process. For example, the processing unit 114 may determine to stand by for one minute before making a second inquiry, instead of standing by for the usual 30 seconds before making a second inquiry, and instruct the dialogue unit 111 to carry out such a process. Furthermore, for example, the processing unit 114 may make no second inquiry of the same content as the inquiry made of the user 20 and to which no response was obtained.

The second inquiry may be an inquiry that requests a response from the user 20 by voice. At this time, the processing unit 114 may determine to output a message requesting the user 20 to respond by voice, and the dialogue unit 111 may implement the determination. Alternatively, the second inquiry may be an inquiry that requests a response from the user 20 by depression of a predetermined button. At this time, the processing unit 114 may determine to output a message requesting the user 20 to respond by depressing the predetermined button, and the dialogue unit 111 may implement the determination.

When the process transitions to step S22, the processing unit 114 determines to make a second inquiry of the user 20 after standing by for the usual waiting time, and instructs the dialogue unit 111 to carry out the above process.

The dialogue unit 111 receives an instruction indicating the process determined by the processing unit 114 in step S21 or step S22, and carries out a dialogue in a manner according to the instruction (or terminates the dialogue).

As described above, when a response from the user 20 to an inquiry was not obtained, the server device 100 according to the present embodiment makes no second inquiry etc., depending on the situation that the user 20 is in and the feeling of the user 20. This allows the server device 100 to take appropriate action according to the situation that the user is in in a dialogue with the user.

### First Modification

In the embodiment, the server device 100 determines based on the data detected by the sensor 30 whether the user 20 is in a situation in which it is difficult to respond. However, the server device 100 can estimate not only the situation of the user 20 but also the feeling of the user 20 and determine whether the user 20 is intentionally ignoring the dialogue via the in-vehicle terminal 200. The process described below is executed in place of the processes in and after step S20 in FIG. 4.

For example, the estimation unit 113 may determine whether the user 20 is irritated based on an image obtained by the camera serving as the sensor 30 capturing the face of the user 20, in addition to estimating the situation that the user 20 is in. Then, when it is determined that the user 20 is not in a situation in which it is difficult to respond and is irritated, the estimation unit 113 may determine that the user 20 has no intention to respond. This is because it can be estimated that the user 20 chooses not to respond although the user is in a situation in which the user can respond. When it is determined that the user 20 has no intention to respond, the estimation unit 113 may make no second inquiry of the user 20.

Furthermore, for example, when the speaker 250 of the in-vehicle terminal 200 is muted, the estimation unit 113 can determine that the user 20 is intentionally ignoring an inquiry made of the user 20. In this case, the processing unit 114 may determine to announce a message that prompts the user to unmute the speaker 250, or to announce a message that informs the user of some keyword to start a dialogue at a convenient timing. Then, the processing unit 114 may instruct the dialogue unit 111 to carry out the process. The dialogue unit 111 may then output, to the display 240 or the like, a message that prompts the user to unmute the speaker or a message that informs the user of a keyword to start a dialogue at a convenient timing.

### Second Modification

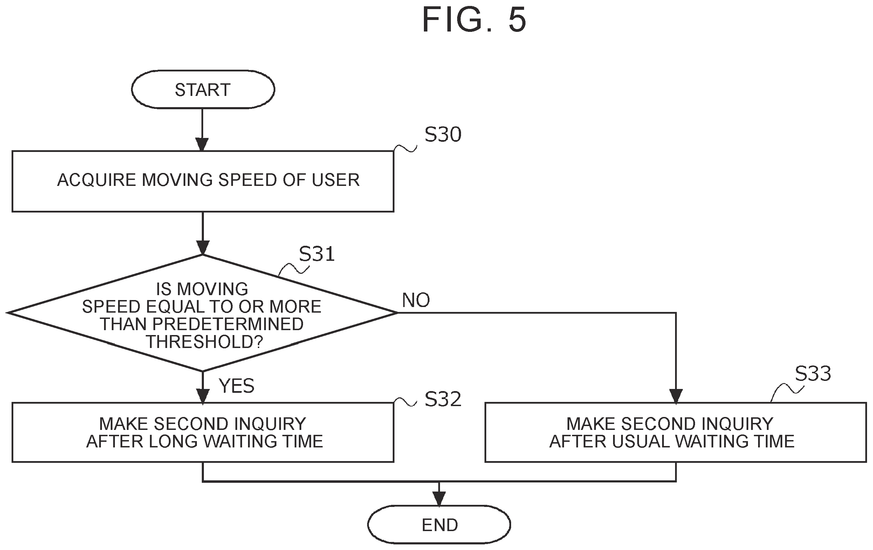

In the above embodiment, the estimation unit 113 changes the action to be taken when no response is obtained from the user 20 according to whether the user 20 is in a situation in which it is difficult to respond, based on the data acquired by the sensor 30. However, the estimation unit 113 can also change the action to be taken when no response is obtained from the user 20 according to the moving speed of the user 20. FIG. 5 is a flowchart of a process, to be executed by the server device 100 according to a second embodiment, according to the moving speed of the user. The process in and after step S30 illustrated in FIG. 5 is a specific example of the process executed after the process in step S12 illustrated in FIG. 3 in place of steps S13 and S14.

In step S30, the acquisition unit 112 acquires data indicating the moving speed of the user 20 acquired by the sensor 30. The acquisition unit 112 may acquire data indicating the moving speed of the vehicle 10 that the user 20 is on from the vehicle 10. Alternatively, the acquisition unit 112 may acquire data indicating the moving speed of a terminal associated with the user 20 from the terminal.

Next, in step S31, the estimation unit 113 determines whether the moving speed of the user 20 is equal to or more than a predetermined threshold. In the present step, a positive determination is made when the estimation unit 113 determines that the moving speed of the user 20 is equal to or more than the predetermined threshold.

When a positive determination is made in the present step, the process transitions to step S32.

When a negative determination is made in the present step, the process transitions to step S33.

When the process transitions to step S32, the processing unit 114 determines to make a second inquiry of the user 20 after standing by for a waiting time longer than the usual waiting time, and instructs the dialogue unit 111 to carry out the above process.

When the process transitions to step S33, the processing unit 114 determines to make a second inquiry of the user 20 after standing by for the usual waiting time, and instructs the dialogue unit 111 to carry out the above process.

Thereafter, the dialogue unit 111 receives the instruction in step S32 or step S33 and carries out a dialogue in a manner according to the instruction.

As described above, the server device 100 according to the second embodiment can take appropriate action according to the situation that the user 20 is in when no response to an inquiry is obtained from the user 20.

### Third Modification

In the second modification, the server device 100 changes the action to be taken when no response is obtained from the user 20 based on the moving speed of the user 20. However, the server device 100 can also change the action to be taken when no response is obtained from the user 20 based on image data captured around the user. The process described below is executed in place of the process illustrated in FIG. 5.

First, the acquisition unit 112 acquires image data from an in-vehicle camera of the vehicle 10 that the user 20 is on. Then, the estimation unit 113 determines whether the user 20 is moving on a road with poor visibility based on the image data. When the estimation unit 113 determines that the user 20 is moving on a road with poor visibility, the processing unit 114 determines to make a second inquiry of the user 20 after standing by for a waiting time longer than the usual waiting time, and instructs the dialogue unit 111 to carry out the above process. When the estimation unit 113 determines that the user 20 is not moving on a road with poor visibility, the processing unit 114 determines to make a second inquiry of the user 20 after standing by for the usual waiting time, and instructs the dialogue unit 111 to carry out the above process. In either case, the dialogue unit 111 carries out a dialogue in the manner indicated by the processing unit 114.

For example, the estimation unit 113 analyzes the image data to recognize the width and the curvature of the road on which the vehicle 10 is traveling, the presence or absence of an obstacle, the presence or absence of a pedestrian, and the like. Then, when the width of the road is narrower than a predetermined width, the estimation unit 113 may determine that the user 20 is moving on a road with poor visibility. Alternatively, the estimation unit 113 may determine that the user 20 is moving on a road with poor visibility on condition that the curvature of the road is greater than a predetermined value, the size of an obstacle is greater than a predetermined size, or the amount of obstacles is greater than a predetermined amount. Alternatively, the estimation unit 113 may determine that the user 20 is moving on a road with poor visibility on condition that there are a predetermined number of pedestrians or more, or the pedestrians include children, elderly people, or the like.

### Other Modifications

The embodiment described above is merely exemplary, and the present disclosure may be modified as appropriate without departing from the spirit and scope of the present disclosure. For example, the processes and units described in the present disclosure can be freely combined unless any technical contradiction occurs.

In addition, while the information processing device according to the present disclosure is the server device 100 in the present embodiment, the processes illustrated in FIGS. 3 to 5 performed by the information processing device according to the present disclosure may also be executed by the in-vehicle terminal 200. When the processes according to the embodiment and the first to third modifications are executed by the in-vehicle terminal 200, the acquisition of sensor data, the estimation of the situation or the feeling of the user 20, and the determination and implementation of a predetermined process for adjusting the progress of a dialogue according to the situation or the feeling of the user 20 are all executed by the in-vehicle terminal 200 mounted on the vehicle 10.

When the processes according to the embodiment and the first to third modifications are executed by the in-vehicle terminal 200, the in-vehicle terminal 200 acquires data from the sensor 30 through communication via the in-vehicle network 50.

The in-vehicle terminal 200 then estimates the situation that the user 20 is in or the feeling of the user 20 based on the data acquired from the sensor 30 and the like. Then, the in-vehicle terminal 200 determines and performs a predetermined process for adjusting the progress of a dialogue according to the estimated situation or feeling of the user 20. For example, when it is determined based on the data acquired from the sensor 30 or the like that the user 20 is in a situation in which it is difficult to respond to a dialogue, the in-vehicle terminal 200 makes no second inquiry of the user 20.

Part of the processing by the in-vehicle terminal 200, for example, dialogue generation by AI, may be performed by the server device 100, and the processing other than the dialogue generation by AI may be performed by the in-vehicle terminal 200.

Furthermore, the processing unit 114 of the control unit 110 of the server device 100 may determine to execute a predetermined process related to the progress of two or more dialogues based on the situation that the user 20 is in or the feeling of the user 20. For example, the processing unit 114 may determine whether the user 20 is in a situation in which it is difficult to respond, and may also determine whether the moving speed of the user 20 indicates a value more than a predetermined threshold. Then, when the user 20 is in a situation in which it is difficult to respond to a dialogue and the moving speed of the user 20 is more than the predetermined threshold, the processing unit 114 may determine to make a second inquiry of the user 20 after standing by for a waiting time longer than the usual waiting time. Furthermore, the dialogue unit 111 may make a second inquiry in the manner determined by the processing unit 114.

Furthermore, the second inquiry made by the dialogue unit 111 may be made by making a second inquiry by voice and making a second inquiry by display of an image on a screen at the same time.

The acquisition unit 112 may also acquire image data obtained by capturing an image of the user 20 or a scene around the user 20. Then, the estimation unit 113 may estimate the situation that the user 20 is in or the feeling of the user 20 based on the image data, and the processing unit 114 may determine a predetermined process for adjusting the progress of a dialogue based on the estimated situation or feeling. Then, the dialogue unit 111 may carry out a dialogue in the manner determined by the processing unit 114 (or may terminate the dialogue).

The present disclosure can also be implemented by supplying a computer with a computer program that implements the functions described in relation to the above embodiment and causing one or more processors of the computer to read and execute the program. Such a computer program may be provided to the computer by a non-transitory computer-readable storage medium connectable to the system bus of the computer, or may be provided to the computer via a network. The non-transitory computer-readable storage medium is, for example, any type of disc such as a magnetic disk (floppy (registered trademark) disk, hard disk drive (HDD), etc.), an optical disc (compact disc read only memory (CD-ROM), digital versatile disc (DVD), Blu-ray disc, etc.), a read only memory (ROM), a random access memory (RAM), an erasable programmable read only memory (EPROM), an electrically erasable programmable read only memory (EEPROM), a magnetic card, a flash memory, an optical card, and any type of medium suitable for storing electronic commands.

## Claims

1. An information processing device (100; 200) configured to hold a dialogue with a user (20) in a natural language, the information processing device (100; 200) comprising
a processor configured to:
when there is no response from the user (20) to an inquiry made by the information processing device (100; 200), estimate a situation that the user (20) is in based on information acquired by at least one of one or more sensors (30) installed around the user (20); and
execute a predetermined process for adjusting progress of the dialogue according to the estimated situation.

2. The information processing device (100; 200) according to claim 1, wherein the processor is configured to:
further estimate a feeling of the user (20) based on the information acquired by the at least one of the one or more sensors (30); and
execute the predetermined process further based on the feeling of the user (20).

3. The information processing device (100; 200) according to claim 2, wherein:
the predetermined process is a process related to making a second inquiry of the user (20); and
the processor is configured to, when determination is made based on the information acquired by the at least one of the one or more sensors (30) that the user (20) is in a situation in which responding is difficult when there is no response from the user (20), make no second inquiry, or stand by to make the second inquiry for a longer waiting time compared to when determination is made that the user (20) is not in the situation in which the responding is difficult.

4. The information processing device (100; 200) according to claim 2, wherein:
the predetermined process is a process related to making a second inquiry of the user (20); and
the processor is configured to make no second inquiry when determination is made based on the information acquired by the at least one of the one or more sensors (30) that the user (20) has no intention to respond.

5. The information processing device (100; 200) according to claim 1, wherein:
the predetermined process is a process related to making a second inquiry of the user (20); and
the processor is configured to
further acquire a moving speed of the user (20), and
when the moving speed is equal to or more than a predetermined threshold when there is no response from the user (20), stand by to make the second inquiry for a longer waiting time compared to when the moving speed is less than the predetermined threshold.

6. The information processing device (100; 200) according to claim 1, wherein:
the predetermined process is a process related to making a second inquiry of the user (20); and
the processor is configured to
further acquire image data obtained by capturing a scene around the user (20), and
when determination is made based on the image data captured around the user (20) that the user (20) is moving on a road with poor visibility when there is no response from the user (20), stand by to make the second inquiry for a longer waiting time compared to when the determination is not made that the user (20) is moving on the road with poor visibility.

7. The information processing device (100; 200) according to any one of claims 3 to 6, wherein the second inquiry includes at least one of a second inquiry made of the user (20) by voice and a second inquiry made of the user (20) by display of an image on a screen.

8. The information processing device (100; 200) according to any one of claims 3 to 6, wherein:
the second inquiry is a second inquiry made of the user (20); and
the second inquiry includes at least one of an inquiry that requests a response from the user (20) by voice and an inquiry that requests a response from the user (20) by depression of a predetermined button.

9. The information processing device (100; 200) according to any one of claims 1 to 6, wherein the information acquired from the sensors (30) includes at least one of data that indicate a vehicle speed of a vehicle that the user (20) is on, image data obtained by a predetermined camera capturing the user (20) or a scene around the user (20), and sound data that indicate a sound generated by the user (20) or a sound generated around the user (20).

10. The information processing device (100; 200) according to claim 1 or 2, wherein the processor is configured to execute two or more predetermined processes based on the situation that the user (20) is in or a feeling of the user (20).

11. An information processing method executed by an information processing device (100; 200) configured to hold a dialogue with a user (20) in a natural language, the information processing method comprising:
when there is no response from the user (20) to an inquiry made by the information processing device (100; 200), estimating a situation that the user (20) is in based on information acquired by at least one of one or more sensors (30) installed around the user (20); and
executing a predetermined process for adjusting progress of the dialogue according to the estimated situation.

12. The information processing method according to claim 11, further comprising:
further estimating a feeling of the user (20) based on the information acquired by the at least one of the one or more sensors (30); and
executing the predetermined process further based on the feeling of the user (20).

13. The information processing method according to claim 12, wherein:
the predetermined process is a process related to making a second inquiry of the user (20); and
the information processing method further comprises, when determination is made based on the information acquired by the at least one of the one or more sensors (30) that the user (20) is in a situation in which responding is difficult when there is no response from the user (20), making no second inquiry, or standing by to make the second inquiry for a longer waiting time compared to when determination is made that the user (20) is not in the situation in which the responding is difficult.

14. The information processing method according to claim 12, wherein:
the predetermined process is a process related to making a second inquiry of the user (20); and
the information processing method further comprises making no second inquiry when determination is made based on the information acquired by the at least one of the one or more sensors (30) that the user (20) has no intention to respond.

15. A non-transitory storage medium storing instructions that are executable by one or more processors and that cause the one or more processors to execute the information processing method according to any one of claims 11 to 14.
